# EUROPEAN PATENT APPLICATION

(11) **EP 2 744 055 A1**
(43) Date of publication of application: **18.06.2014**
(21) Application number: 12196886.1
(22) Date of filing: 13.12.2012
(51) Int. Cl.: H02G 1/00, H02G 3/00

(54) **Electrical installation marking aid**

(71) Applicant: Shaw, Barry, Middlesex HA4 9DE (GB)
(72) Inventor: Shaw, Barry, Middlesex HA4 9DE (GB)
(74) Representative: Hardwick, John Frederick

(57) **Abstract**

An electrical pattress marking template (10) is provided in the form of an outline template (10) comprising a plurality of outline sections (12) each spaced according to wiring regulation horizontal inter-pattress distances and allowing rapid marking of the locations of plural pattresses without re-measuring. A plurality of different outline sections (12) is provided to mark the positions of electrical pattresses for different types of sockets or switches. A distance pole (48) is insertable into a distance pole mount (34) allowing the template to be spaced a wiring regulation distance from the floor (50) against a wall (46). A spirit level (16) provides indication when the template (10) is level. The distanced pole mount (34) allows the distance pole (48) to be positioned on wither side of the template (10) allowing the template (10) to be used to mark positions close to the corner of the wall for all styles of outlines, The distance pole mount 34) also allows the distance pole (48) to be orientated in the direction of the template (10) axis A for ease of transportation. A version of the distance pole mount allows the distance pole to be clicked from one orientation to another. The distance pole (48) is one of a plurality of distance poles supplied with each template. Wiring regulation heights that require distance poles that are longer than can be conveniently held in a pack are assembled by attaching one or more partial distance poles (58) in line with a terminal distance pole (62) to make a lengthened distance pole (64). The template (10) can also be used without the distance pole (48) by providing markings (70, 72, 74, 76, 78) spaced at regulation distances from edges (68, 74) of the template (10) permitting positioning of the template (10).

## Description

The present invention relates to a template for use in marking interior building walls for use in electrical installation relating to buildings. In particular, it relates to use for facilitating installation of light switches and electrical sockets.

Electrical installations are required to comply with regulations that not only govern the nature, current capacity and insulation voltages of cables within a building, but also govern the disposition of electrical switches, in-wall or on-wall electrical installation boxes (pattresses), and electrical sockets. Switches and sockets are also required by the regulations to be situated on a wall within maximum and minimum heights on walls where they are installed.

The United Kingdom trade term for an installation box is a pattress. This terminology may not be the same in all jurisdictions. The term "pattress" is used hereafter. It is to be understood that a pattress is a container, generally cuboid, open on one face, whereon an electrical socket and/or switch can be mounted. A pattress must meet local regulations as well as complying with styles of electrical fittings.

A switch or a socket is fitted to a wall by attaching a pattress to the wall. The pattress can be a surface mounted pattress, or can be sunk into the surface of the wall to be flush with or below the surface. In either case, the socket or switch is attached thereafter onto the pattress.

The present invention relates to marking a wall with outlines of pattresses for switches and sockets, according to the regulations and styles of fitment, with automatic precision and compliance.

In the UK, the Building Regulations Part M apply to building wiring. The present invention also seeks to allow automatic compliance with regulations, such as non-British regulations and regulations for other types of construction, together with interior fitment styles chosen by a designer or architect.

When installing, for example, an electrical socket on a wall, it is necessary and current practise to use a ruler or tape measure to mark, on the wall, using knowledge of the regulations, the position of the base of the future pattress. The pattress itself can then be positioned with its lower edge on the drawn base line and the outline of the pattress marked on the wall to provide guidelines for excavating the surface of the wall prior to sinking and fixing the pattress into or below the surface of the wall.

Use of tape measures and rulers, the need for double check heights and the need to check exact regulations slows even the best installer. The present invention seeks to allow even an unskilled installer to achieve rapid performance.

An installer usually marks the base line, and can mark around the pattress. An installer can accidentally place the pattress with its upper edge against the marked base line, meaning that the pattress can be posited below the position chosen by the skilled installer and potentially in breach of the regulations. The present invention seeks to avoid the possibility of such mistakes.

Various attempts to improve switch and socket installation have been suggested.

United Kingdom Patent Application GB 2248035 (A) discloses a template for use in marking the position at which an electrical socket pattress or the like is to be located on a wall. The template comprises a member formed with apertures that correspond in size to single and double pattresses and that are used to mark on the wall the position of the pattress to be fitted. In use, the member may be placed on the floor to locate one or other of the apertures at a prescribed height above the floor. The member is provided with spirit levels. The present invention seeks to provide improvement there over by providing for marking the positions of plural socket pattresses, by reducing the spirit level count and by providing flexibility in height settings.

United States Patent US 5222303 (A) discloses a template for locating the proper placement of junction boxes and for marking a section of wall to be cut out to accommodate a junction box. The template comprises a first straight portion of designated length having a first end which is free and a second end defining an aperture which is about or slightly larger than the dimension of a junction box. The present invention seeks to provide improvement there over by providing flexibility in height settings and simultaneous marking of plural socket boxes for plural types of sockets and switches.

United Kingdom Patent GB 2364950 (A) discloses a template for marking the position of an electrical socket box or the like comprises a plastic plate having two apertures which correspond in size to single and double boxes. In use, the template may be placed such that the apertures are at a recommended height from floor level. The template includes a spirit level. The present invention seeks to provide improvement there over by providing rapid unerring height setting of wall ox markings. The present invention further seeks to provide improvement there over by allowing simultaneous marking of positions for plural sockets and switches of different kinds.

United States Patent US 5860219 (A) discloses plurality of flat templates, each of which has the outline of an electric outlet box cut therein. A pair of slot-like openings are also cut in the template for weaving the template onto a wallboarder's square, or a carpenter's square. The template slides along the long member of the square to position and install the outlet boxes according to the building specifications. The template is then used to accurately position the corresponding cut out openings in the corresponding wallboard, sheeting or panelling. The apparatus can also be used to install ceiling outlets, and to accurately position the corresponding cut out openings in the ceiling wallboard, sheeting or panelling. The present invention seeks to provide improvement there over by eliminating the possibility of height setting errors. The present invention further seeks to provide improvement there over by providing for level setting errors. The present invention yet further seeks to provide improvement there over by providing for simultaneous marking of positions for plural wall boxes.

The above prior art documents all disclose a template where an outline surrounds the area to be marked. Such physical outlines can block the true positioning of the template if obstructions are present on a wall. The present invention seeks to eliminate such problems

The above prior art documents also disclose an item which can be difficult too transport on the person between individual work positions. The present invention seeks to avoid this inconvenience.

The present invention consists in an apparatus for marking the position of one an electrical pattress on a wall, comprising:
a marking template, allowing marking of the peripheral dimensions of an electrical pattress and positionable on a wall at a desired regulation height;
measuring means operable to be placed against a reference surface and adapted to provide positioning for the template;
   and
a spirit level, affixed to the template and operable to indicate when the template is horizontal;
where
the template is an outline template adapted for marking around the outside thereof.

The invention also provides that the template can comprise a plurality of outline sections where: each outline section can provide for marking of the position of an individual electrical pattress; and adjacent outline sections can be spaced apart by a distance allowing installed electrical pattresses to be at a regulation horizontal distance apart.

The invention also provides an apparatus wherein the measuring means can comprise a distance pole having first and second ends, the positioning pole being affixable to the template by the first end and operable, when the second end is placed in contact the floor beneath a wall, to cause the template to be at the desired height.

The invention also provides that the distance pole can be one of a plurality of distance poles, where each distance pole can have a respective different length from others of the plurality of distance pole; and each distance pole, when used with the template, can allow the template to be at a respective different regulation height.

The invention also provides that, when a distance pole exceeds a predetermined length, the distance pole can be assembled using one or more partial distance poles joined co-linearly with a terminal distance pole.

The invention also provides that the plurality of distance poles can comprise distance poles for positioning the template at each regulation height laid down in the regulations.

The invention also provides a distance pole mount that can be operable to support the distance pole in two positions: a first position on a first side of the template for use in supporting the template in a first horizontal orientation; and a second position on a second side of the template for use in supporting the template in a second horizontal orientation; where the second horizontal orientation is horizontally flipped end to end with respect to the first horizontal orientation.

The invention also provides that the distance pole mount can further be operable to support the distance pole in a third position where the distance pole is positioned along the axis of the template.

The invention also provides that the distance pole can be affixable to the distance pole mount using a screw thread, and the distance pole mount can comprise complementary screw threads useable to support the distance pole in each of the first, second and third positions.

The invention also provides that the distance pole mount can comprise a click stop mechanism useable to allow the distance pole in any one of the first, second and third positions.

The invention also provides an apparatus wherein the measuring means can comprise:
a plurality of markings provided on the template and spaced away a corresponding plurality of regulation distances away one or more references edges on the template;
and wherein,
the template is positionable for an edge of a marking guide to be aligned with marks made on a wall corresponding to a selected distance prior to marking around the outside of a pattress.

The present invention is further explained, by way of example, by the following description, to be read in conjunction with the appended drawings, in which:
Figure 1 is a perspective exemplary view of the body of an electrical installation outline marking template according to the invention.
Figure 2A is an exploded view of one version of a rotationally positioinable distance pole mount that can be used with the invention.
Figure 2B is an exemplary assembled view of the distance pole mount in a first angular position.
Figure 2C is an exemplary view of the distance pole mount of Figures 2A and 2B rotated to a second selectable position.
Figure 2D is an exemplary view of the distance pole mount of Figures 2A, 2B and 2D rotated to a third selectable position.
Figure 3A is an exemplary view of the a typical use of the electrical installation outline marking template of Figure 1 with a distance pole mounted in the distance pole mount positioned in the first position as shown in Figure 2B.
Figure 3B is an exemplary view of the a typical use of the electrical installation outline marking template of Figure 1 with a distance pole mounted in the distance pole mount positioned in the third position as shown in Figure 2D, the electrical installation outline template being used inverted from the view of Figure 3A.
Figure 3C is an exemplary view of the electrical installation outline marking template of Figure 1 with a distance pole mounted in the distance pole mount positioned in a parked transportable position in the second position as shown in Figure 2C.
Figure 4A shows an exemplary one of many distance poles that are supplied for use with the electrical installation outline marking template.
Figure 4B shows an example of how a lengthened distance pole of greater length can be created by collinear assembly of one or more partial distance poles.
Figure 5 shows use of an alternative distance pole mount where no rotation is required.
   and
Figure 6, showing an embodiment with distance markings on the template 10 which can be employed to make use of the template without use of a distance pole

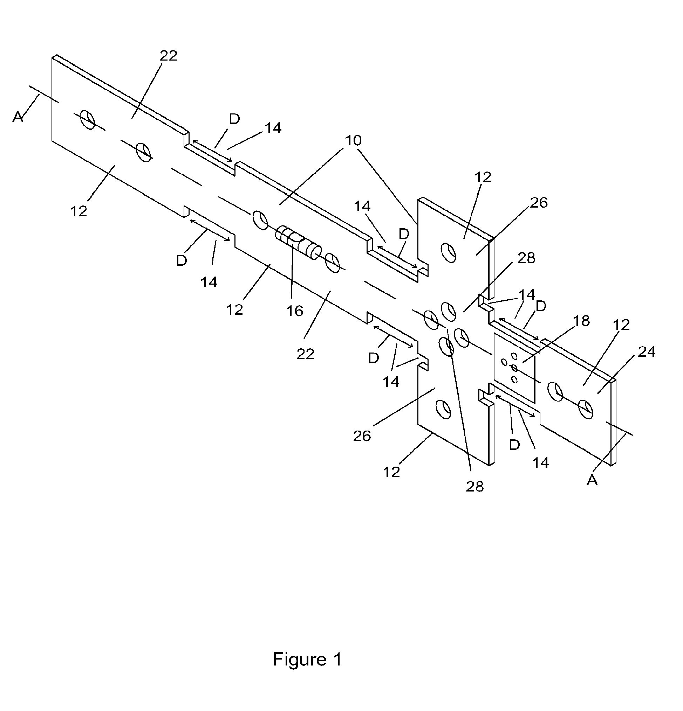

Attention is first drawn to Figure 1, a perspective exemplary view of the body of an electrical installation outline marking template according to the invention.

A first and significant difference between the present invention and the solutions provided in the prior art documents lies in the present invention comprising an outline template 10 having outline sections 12 each defining the regulation shape of pattresses. In order to mark the position of a particular outline section 12, it is simply necessary to apply the outline template 10 to a wall and to mark around the outside of a section onto the wall.

A second significant difference between the present invention and the solutions provided in the prior art documents lies in the present invention providing plural outline sections 12 spaced apart from one another according to the regulations, thereby obviating the need to re-measure between template uses.

A third significant difference between the present invention and the solutions provided in the prior art documents lies in the present invention providing for use of any of a plurality of distance poles that allow for rapid measurement free height positioning to meet regulations. The distance poles prevent inadvertent errors in measurements.

The individual outline sections 12 are separated from one another by outline separation distance D. Template voids 14 are provided between outline sections 12 to permit a marking device to detail at least part of the sides of each outline section 12.

A spirit level 16, viewable both from above and below, is provided affixed to the outline template 10 and designed to allow the axis A, shown in dashed line, of the outline template 10 to be levelled.

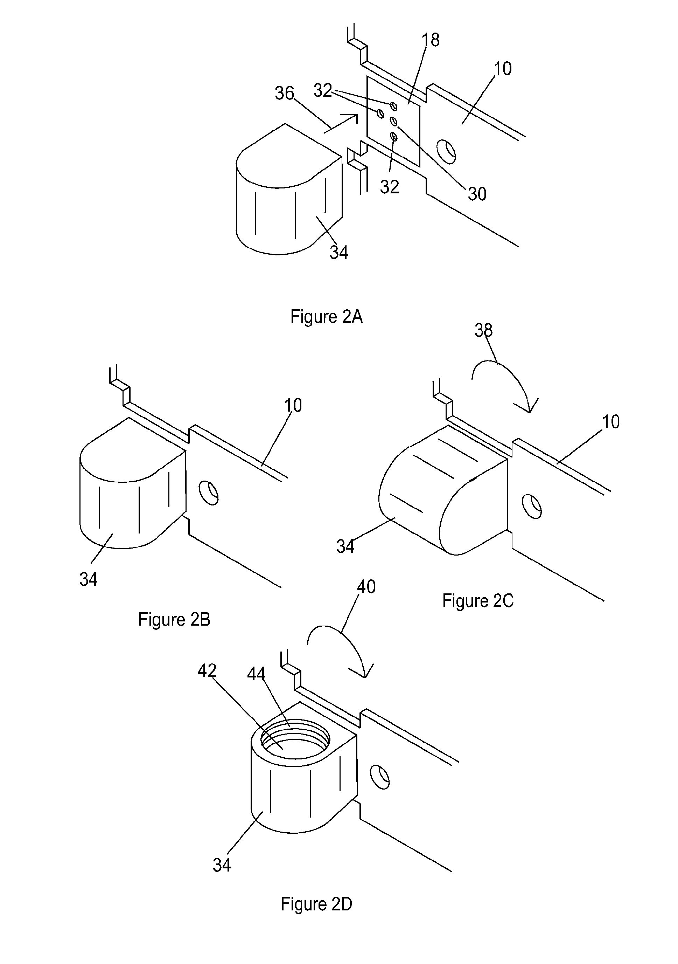

A distance pole mount attachment area 18 is provide on the outline template 10 for attachment, as later described in relation to Figure 2, of a distance pole mount.

Drilling hole location marking points 20 are provided, though penetrating the outline template 10, to allow marking for the location of holes used to affix a pattress. The more usual type of pattress, requires only two fixing holes, as shown in Figure 1. It is to be appreciated that different pattress fixing hole configurations are possible within the invention, and can, include, for example, but not limited to, in addition to the drilling hole location marking points 20 shown, further drilling hole location marking points 20 proximate to each corner of the outline sections 12 to allow fitting of four screw pattresses.

Outline sections 12 on the outline template 10 comprise, in the example shown in Figure 1, two spaced dual socket outline sections 22, a single socket outline section 24, that also doubles as a light switch outline section, and a cooker socket outline section 26 that also provides a further single socket outline section 28 spaced from the a single socket outline section 24 by the regulation distance.

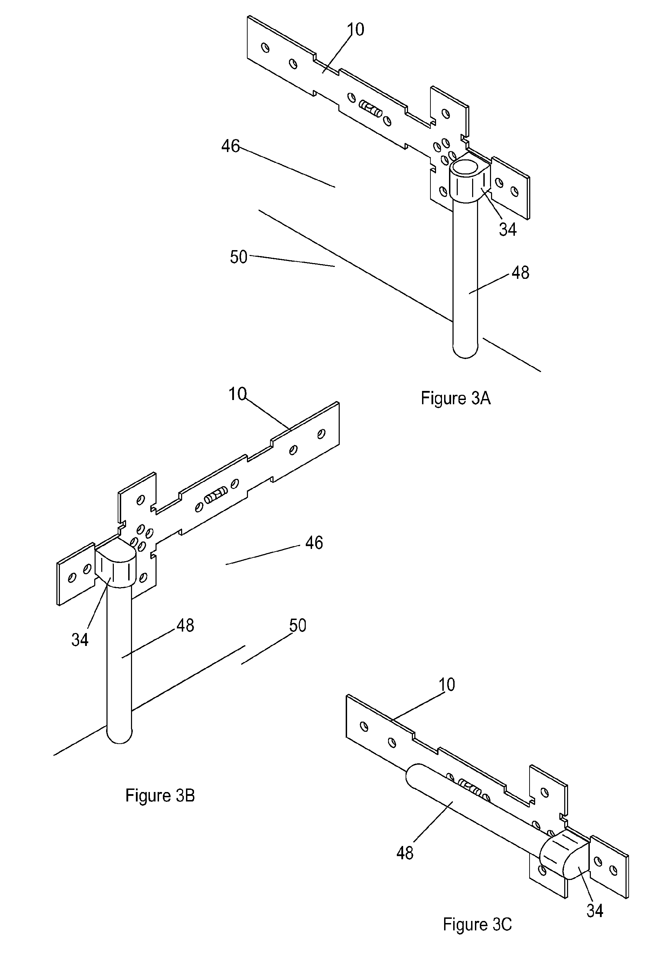

The outline template 10 is useable in an inverted configuration from the configuration shown in Figure 1, otherwise shown in Figure 3B, to allow use proximate to room and outside wall corners.

While the outline template 10, as shown in Figure 1, is designed for use according to UK Building Regulations part M, outline templates 10 for use in accordance with other regulations, for example, but not limited to, regulations in force in other countries and/or for different types of constructions all fall within the invention. In these alternative conditions, different sizes and spacing of outline areas 12 will be used in the invention.

Attention is next drawn to Figure 2A, an exploded view of one version of a rotationally positioinable distance pole mount that can be mounted on the distance pole mount attachment area 18 to be used with the invention.

The distance pole mount attachment area 18 comprises a rotational axle aperture 30 located in a spaced circularly symmetric relationship with three rotational detents 32 arranged equiangularly around a semicircle with the rotational axle aperture 30 at their centre. The rotational detents 32 can be mere dimples or full holes through the surface of the outline template 10 and represent, respectively, means for holding, against spring pressure, a distance pole mount 34 in an upward, downward and axial A direction.

The distance pole mount 34 is assembled by urging the distance pole mount 34 against spring pressure onto the pole mount attachment area 18 as indicated by arrow 36 and fixing it in place with a countersunk screw or any other means that does not protrude from the rear face of the outline template and allows the distance pole mount 34 to rotate around the rotational axle aperture 30.

Attention is next drawn to Figure 2B, an exemplary assembled view of the distance pole mount 34 in a first angular position. The distance pole mount 34 is held by spring detent location in a rotational detent 32 in a position where a distance pole (to be described) is held in an downward position as seen in Figures 1 and 2A.

Attention is next drawn to Figure 2C, an exemplary view of the distance pole mount of Figures 2A and 2B rotated to a second selectable position. The distance pole mount 34 is rotated as indicated by first rotary arrow 38 until it clicks into the second position with, as explained later, with the distance pole, when fitted, pointing along the axis A of the outline template 10.

Attention is next drawn to Figure 2D an exemplary view of the distance pole mount of Figures 2A, 2B and 2C rotated to a third selectable position. The distance pole mount 34 is rotated as indicated by second rotary arrow 40 until it clicks into the third position with, as explained later, with the distance pole, when fitted, pointing upward from of the outline template 10 when the outline template 10 is viewed as shown in Figure 1.

Seen in Figure 2D is a distance pole acceptance aperture 42 having around its periphery a distance pole engaging thread 44 that engages, as is later explained, a threaded portion of a distance pole.

It is to be appreciated that other means can be used within the invention for sleeking the rotational position of the distance pole mount 34, including, but not limited to: use of screws and pins to secure the distance pole mount 34 when it is in the correct position; and physical removal of the distance pole mount 34 from the outline template and replacement into a new position maintained by peg holes and the like. All that matters, according to, the invention, is that the distance pole and/or the distance pole mount 34 be fixable in at least the first and third angular orientations relative to the outline template 10.

Attention is next drawn to Figure 3A, an exemplary view of the a typical use of the electrical installation outline marking template 10 of Figure 1 with a distance pole mounted in the distance pole mount positioned in the first position as shown in Figure 2B.

The outline template 10 is shown in the orientation of Figure 1, urged flat against the vertical surface of a wall 46 with a distance pole 48 mounted in the distance pole mount 34, urged vertically against the floor 50 beneath the wall 46 to maintain the outline template 10 at the distance determined by the distance pole 48, and levelled by use of the spirit level 16.

Attention is next drawn to Figure 3B is an exemplary view of the a typical use of the electrical installation outline marking template 10 of Figure 1 with a distance pole 48 mounted in the distance pole mount 34 positioned in the third position as shown in Figure 2D, the electrical installation outline template being used inverted from the view of Figure 3A.

The outline template 10 is here used in a horizontally flipped position compared to that shown in Figure 1. The flipped outline template 10 urged flat against the vertical surface of a wall 46 with the distance pole 48 mounted in the distance pole mount 34 in the third position, urged vertically against the floor 50 beneath the wall 46 to maintain the outline template 10 at the distance determined by the distance pole 48, and levelled by use of the spirit level 16, which is visible both from above and below.

Attention is next drawn to Figure 3C, an exemplary view of the electrical installation outline marking template of Figure 1 with a distance pole 48 mounted in the distance pole mount 34 positioned in a parked transportable position in the second position as shown in Figure 2C.

The distance pole 48 lies parallel to the axis A of the outline template 10 and allows easy transportation of the totally assembled outline template10 when it is moved from position to position in a workplace with a view to performing marking operations for pattresses at the same repeated height from the floor. Transportation is eased by the general reduction in the outside dimensions of the totally assembled outline template, and also by the distance pole 48 and the outline template 10 forming a hook with the distance pole mount 34 at its apex thereby permitting the totally assemble outline template 10 48 to be hung over edges in work trousers, overalls, bags and backpacks.

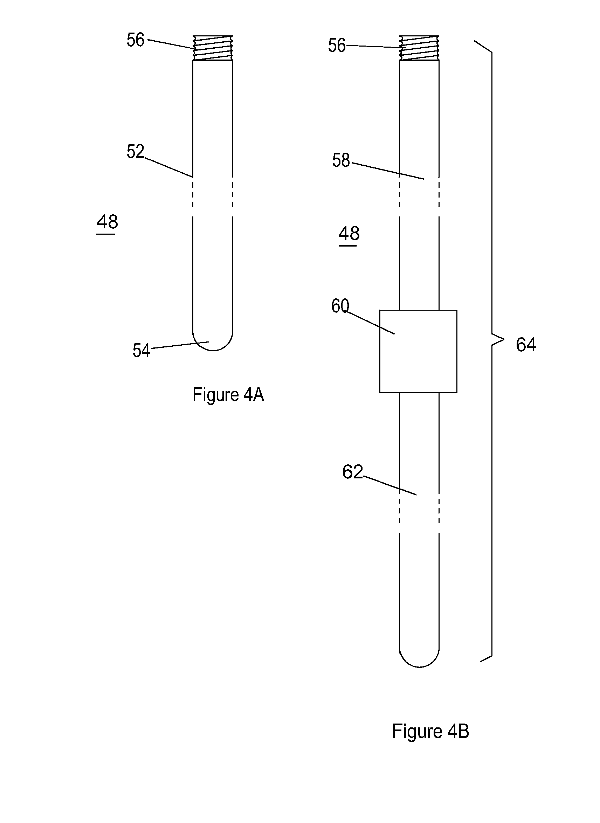

Attention is next drawn to Figure 4A showing an exemplary one of many distance poles that are supplied for use with the electrical installation outline marking template.

An outline template kit is supplied containing an outline template 10 and a plurality of distance poles 48 that can be use with the outline template 10 to position the outline template 10 at any one of a plurality of regulation heights above the floor 50.

A distance pole 48 comprises a cylindrical body 52 with a preferably hemispherical shaped end 54 that, in use, is urged against the floor 50 to be able to rock, thereby allowing the outline template to be levelled using the spirit level 16.

The cylindrical body 52 has, at its other end, a threaded portion 56 that, in use, screws into the distance pole acceptance aperture 42 using the distance pole engaging thread 44 as shown in Figure 2D.

Attention is next drawn to Figure 4B showing an example of how a lengthened distance pole of greater length can be created by collinear assembly of one or more partial distance poles.

A partial distance pole 58 having threaded portions 56 at both ends screws into one side of a collar 60. A terminal distance pole 62 having the same general features as the distance pole 48 shown in Figure 4A screws into the other side of the collar 60 to form a lengthened distance pole 64. Even longer lengthened distance poles 64 can be formed by assembling plural partial distance pole 58 and collar 60 pairs ahead of a terminal distance pole 62. Assembly of lengthened distance poles is used to minimize the size of the template 10 kit to allow it easily to be accommodated in a container even though some of the regulation heights exceed the dimensions of the container.

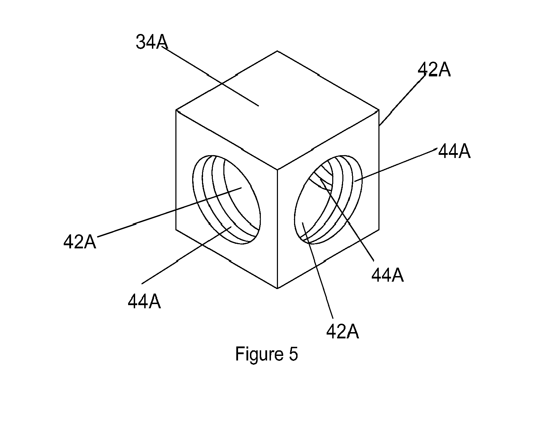

Attention is next drawn to Figure 5 showing use of an alternative distance pole mount 34A where no rotation is required. The alternative distance pole mount 34A has six faces. The alternative distance pole mount 34A is generally cuboid in shape and rigidly fixed to the distance pole mount attachment area 18. The alternative distance pole mount 34A is provided with three alternative distance pole acceptance apertures 42A each with alternative distance pole engaging threads 44A on three faces thereof with two of the of the alternative distance pole acceptances apertures 42A being aligned on opposite faces to allow a distance pole 48. The distance pole 48 in use can be screwed into and removed from the three alternative distance pole acceptance aperture 42A to achieve the configurations shown in Figures 3A to 3C.

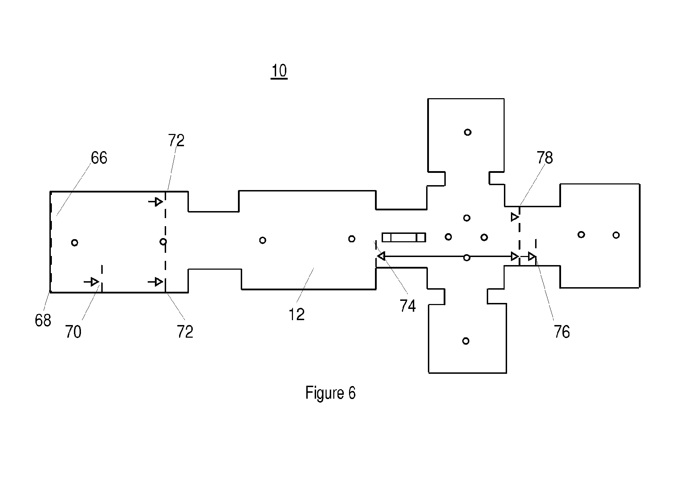

Attention is finally drawn to Figure 6, showing an embodiment with distance markings on the template 10 which can be employed to make use of the template without use of a distance pole 48. The distance markings are printed upon the template together with an associated legend (not shown) indication the purpose of each of the markings.

A marking base line 66 is provided by a measuring end 68 of the template 10. In vertical use, the measuring end 68 is placed flat against the floor or desk/table surface to position the template in a vertical orientation with the marking base line 66 in a horizontal position. In horizontal use the measuring end 68 is placed against a wall edge or corner, or against the edge of a socket, so that the marking base line 66 is in a vertical position.

A first distance marking 70 is provided 50 mm away from marking base line 66 indicative of the distance that should be provided between adjacent sockets.

A second distance marking 72 is provided 113.5 mm away from marking base line 66 indicative of the minimum distance that socket outlets should be above work surfaces in kitchens and offices.

It should be noted that additions to existing sockets can remain at existing heights.

A secondary measurement baseline 74 is provided at the distal end of the outline section 12 from the making base line 68. A third distance marking is provided 150 mm away from the secondary measurement baseline 74 indicative of the minimum spacing allowed between nominal voltage socket outlets and low voltage socket outlets.

Finally, a fourth distance marking 78 is provided 450 mm away from the marking base line 66 indicating that sockets in newbuilds should be positioned 450 mm from finished floor levels.

In use, the template 10 measuring end 68 (or the distal edge of the outline section 12) is placed on or against the boundary from which measurement is to be made and one or more marks made at the appropriate using a marking instriment at the indicated point or distance.

When a pattress is to be installed, the lower edge of the pattress is positioned level with the marked line,

The markings 70 72 74 76 78 can also be used properly to space light switch and socket pattresses away from wall edges, wall corners, and door uprights.

In different countries, the markings 70 72 74c76 78 may be differently applied in accord with local regulations and custom.

The omission of the distance pole 48 while still providing utility from the markings 70 72 7476 78 provides the advantage of rendering the template 10 one-piece, easily transportable and not requiring a container for its storage and/or transport.

The overall outline template 10 and its associated parts can be made using plastic, metal, wood, or any combination thereof. Distance pole 48 insertion or removal can be accomplished not only with screw threads 56 42 42A 44 44A but can also employ, for example, but not limited to; screw threads; click fits; and retentions pins.

The invention if further clarified and defined by the appended Claims.

## Claims

1. An apparatus for marking the position of one an electrical pattress on a wall, comprising:
a marking template, allowing marking of the peripheral dimensions of an electrical pattress and positionable on a wall at a desired regulation height;
measuring means operable to be placed against a reference surface and adapted to provide positioning for the template;
and
a spirit level, affixed to the template and operable to indicate when the template is horizontal;
where
the template is an outline template adapted for marking around the outside thereof.

2. The apparatus of Claim 1, wherein the template comprises a plurality of outline sections where:
each outline section provides for marking of the position of an individual electrical pattress;
and
adjacent outline sections are spaced apart by a distance allowing installed electrical pattresses to be at a regulation horizontal distance apart.

3. An apparatus according to any of the preceding claims wherein the measuring means comprises a distance pole having first and second ends, the positioning pole being affixable to the template by the first end and operable, when the second end is placed in contact the floor beneath a wall, to cause the template to be at the desired height.

4. The apparatus of Claim 3 wherein the distance pole is one of a plurality of distance poles, where
each distance pole has a respective different length from others of the plurality of distance pole;
and
each distance pole, when used with the template, allows the template to be at a respective different regulation height.

5. The apparatus of any of the preceding Claims wherein, when a distance pole exceeds a predetermined length, the distance pole is assembled using one or more partial distance poles joined co-linearly with a terminal distance pole.

6. The apparatus of Claim 4 or 5 wherein the plurality of distance poles comprises distance poles for positioning the template at each regulation height laid down in the regulations.

7. The apparatus of any one of claims 3 to 6 comprising a distance pole mount operable to support the distance pole in two positions:
a first position on a first side of the template for use in supporting the template in a first horizontal orientation;
and
a second position on a second side of the template for use in supporting the template in a second horizontal orientation;
where
the second horizontal orientation is horizontally flipped end to end with respect to the first horizontal orientation.

8. The apparatus of claim 7 wherein the distance pole mount is further operable to support the distance pole, in a third position, where the distance pole is positioned along the axis of the template.

9. The apparatus of Claim 7 or 8 wherein the distance pole is affixable to the distance pole mount using a screw thread, and the distance pole mount comprises screw threads useable to support the distance pole in each of the first, second and third positions.

10. The apparatus of Claim 7 or 8 wherein the distance pole mount comprises a click stop mechanism useable to allow the distance pole in any one of the first, second and third positions.

11. An apparatus, according to Claim 1 or Claim 2, wherein the measuring means comprises:
a plurality of markings provided on the template and spaced away a corresponding plurality of regulation distances away one or more references edges on the template;
and wherein,
the template is positionable for an edge of a marking guide to be aligned with marks made on a wall corresponding to a selected distance prior to marking around the outside of a pattress.

12. An apparatus substantially as described with reference to the appended drawings.
